# EUROPÄISCHE PATENTSCHRIFT

(11) **EP 4 392 770 B1**
(45) Veröffentlichungstag und Bekanntmachung des Hinweises auf die Patenterteilung: **06.11.2024**
(21) Anmeldenummer: 22772517.3
(22) Anmeldetag: 02.09.2022
(51) Int. Cl.: G01N 27/66, G01N 27/08

(54) **VERFAHREN ZUM ERMITTELN EINER ZUSAMMENSETZUNG EINER STOFFPROBE UND DETEKTOR**
METHOD FOR DETERMINING A COMPOSITION OF A SUBSTANCE SAMPLE AND DETECTOR
PROCÉDÉ DE DÉTERMINATION DE LA COMPOSITION D'UN ÉCHANTILLON DE MATIÈRE ET DÉTECTEUR

(30) Priorität: 09.11.2021 EP 21207197
(43) Veröffentlichungstag der Anmeldung: 03.07.2024
(73) Patentinhaber: Siemens Aktiengesellschaft, 80333 München (DE)
(72) Erfinder: STEINBACHER, Franz, 76137 Karlsruhe (DE); HARR, Konstantin, 76133 Karlsruhe (DE); RICHTER, Josef, 76185 Karlsruhe (DE)
(74) Vertreter: Siemens Patent Attorneys
(86) Internationale Anmeldenummer: PCT/EP2022/074445
(87) Internationale Veröffentlichungsnummer: WO 2023/083513

(56) Entgegenhaltungen:
- WO-A1-2019/106158
- DE-A1- 102013 001 035
- J. E. LOVELOCK: "Ionization Methods for the Analysis of Gases and Vapors", ANALYTICAL CHEMISTRY, vol. 33, no. 2, 1 February 1961 (1961-02-01), US, pages 162 - 178, XP055291990, ISSN: 0003-2700, DOI: 10.1021/ac60170a003

## Beschreibung

Die Erfindung betrifft ein Verfahren zum Ermitteln einer Zusammensetzung einer Stoffprobe und einen dazu geeigneten Detektor.

Die Offenlegungsschrift FR 2 683 422 A1 offenbart einen Plasmabrenner, bei dem eine Plasmaflamme in aus einem Gasstrahl erzeugt wird. Der Plasmabrenner weist einen Hochfrequenzgenerator auf, der zu einem Zünden der Plasmaflamme ausgebildet ist. Mittels des Hochfrequenzgenerators wird ein hochfrequentes Magnetfeld erzeugt, durch das die Plasmaflamme gezündet wird.

Aus der Druckschrift US 4,482,246 ist Plasmabrenner bekannt, der zum Analysieren von Aerosolen oder Pulverproben geeignet ist. Zur Analyse wird eine Emissionsspektroskopie der Plasmaflamme durchgeführt.

Die Patentanmeldung DE 10 2013 001 035 A1 offenbart einen Sensor zum Nachweis einer chemischen Spezies, der eine Schicht aus einem Halbleitermaterial umfasst, die einen leitfähigen Kanal bildet. Der Sensor umfasst ebenso eine Schicht aus einem Gate-Material und ein Elektrodenpaar, wobei die Elektroden jeweils am Ende des Kanals angeordnet sind.

Aus dem Artikel "Ionization Methods for the Analysis of Gases and Vapor" von J. E. Lovelock, erschienen in Analytical Chemistry, Band 33, Nr. 2, ist ein Ionisationsdetektor bekannt. Der Ionisationsdetektor umfasst zwei Elektroden, die gegenüberliegend in einer Ionisationskammer angeordnet sind. Eine der Elektroden ist mit einer Strommessvorrichtung verbunden.

In der Prozessanalytik besteht Bedarf an Detektoren, die eine hohe Genauigkeit bei der Ermittlung einer Zusammensetzung einer Stoffprobe bieten. Gleichzeitig wird eine erhöhte Messgeschwindigkeit gefordert. Ebenso besteht die Anforderung, dass derartige Detektoren kosteneffizient, robust, kompakt und zuverlässig sein sollen. Der Erfindung liegt die Aufgabenstellung zugrunde, eine Möglichkeit bereitzustellen, eine Ermittlung einer Zusammensetzung einer Stoffprobe erlaubt und dabei in zumindest einem der dargelegten Aspekte eine Verbesserung bietet.

Die Aufgabenstellung wird durch ein erfindungsgemäßes Verfahren nach Anspruch gelöst, das zu einem Erfassen einer Zusammensetzung einer Stoffprobe ausgebildet ist. Die Stoffprobe umfasst zumindest eine erste und eine zweite Komponente. Ferner kann die Stoffprobe ein Gasgemisch, ein Flüssigkeitsgemisch, ein Aerosol oder eine Suspension sein, die jeweils elektrisch nichtleitend sind. Zur Durchführung des Verfahrens wird ein Detektor eingesetzt, dem die Stoffprobe zuzuführen ist. In einem ersten Schritt des Verfahrens wird der Detektor in einem aktiven Betriebszustand bereitgestellt, in dem dieser funktionstüchtig ist und zum Aufnehmen der Stoffprobe eingerichtet ist.

Ebenso wird im ersten Schritt die Stoffprobe in eine Messzelle des Detektors zugeführt, also eingeleitet. Es folgt ein zweiter Schritt, in dem ein elektromagnetisches Feld mit einer einstellbaren Feldstärke in der Messzelle erzeugt wird. Die Stoffprobe nimmt in der Messzelle einen Raum zwischen einem ersten und einem zweiten Pol der Messzelle ein, zwischen denen das einstellbare elektromagnetische Feld angelegt ist. Mittels des einstellbaren elektromagnetischen Felds ist bei einer hinreichenden Feldstärke eine Ionisation der ersten Komponente hervorrufbar. Das elektromagnetische Feld ist durch eine Steuereinheit und/oder einen Benutzer in puncto Feldstärke einstellbar. Insbesondere ist die Feldstärke während des zweiten Schritts steigerbar. Im zweiten Schritt erfolgt ebenso ein Erfassen einer Leitfähigkeit zwischen dem ersten und zweiten Pol vorliegenden Leitfähigkeit, die durch die Leitfähigkeit der Stoffprobe beeinflusst wird.

Das Verfahren umfasst auch einen dritten Schritt, in dem ein erster Anstieg der Leitfähigkeit zwischen dem ersten und zweiten Pol erfasst wird. Hierbei wird auch die Feldstärke erfasst, bei der der erste Anstieg auftritt. Bei hinreichender Feldstärke wird die erste Komponente der Stoffprobe ionisiert, wodurch sich dessen Leitfähigkeit ändert. Die Ionisation der ersten Komponente tritt im Wesentlichen stufenförmig, also ohne Hochlaufphase, ein. Dementsprechend wird durch die Ionisation der ersten Komponente insgesamt die Leitfähigkeit der Stoffprobe im Wesentlichen stufenförmig erhöht. Zum Erfassen der Leitfähigkeit zwischen dem ersten und zweiten Pol ist der Detektor mit geeigneten Erfassungsmitteln versehen. Ferner umfasst das Verfahren einen vierten Schritt, in dem die erste Komponente identifiziert wird und/oder eine Konzentration der ersten Komponente der Stoffprobe ermittelt wird. Dies erfolgt anhand des im dritten Schritt erfassten ersten Anstiegs der Leitfähigkeit und der dabei vorliegenden Feldstärke. Jeder Stoff, insbesondere jedes Molekül, weist eine charakteristische Ionisationsenergie auf, bei der die zugehörige Leitfähigkeit des Stoffs gesteigert wird. Zwischen der elektrischen Feldstärke und der zur Ionisation zugeführten Energie besteht somit ein auswertbarer Zusammenhang.

Der Erfindung liegt unter anderem die überraschende Erkenntnis zugrunde, dass zwischen den Ionisationseigenschaften von Stoffen und elektrischen Größen, die an einem entsprechenden Detektor erfassbar sind, Zusammenhänge vorliegen, die eine Identifikation und Quantifizierung von Komponenten einer Stoffprobe erlauben. Elektromagnetische Felder sind mit erhöhter Dynamik erzeugbar. Ebenso sind zugehörige elektrische Größen schnell und exakt messbar. Mit dem erfindungsgemäßen Verfahren ist folglich eine zuverlässige und exakte Erfassung der Zusammensetzung der Stoffprobe mit erhöhter Geschwindigkeit möglich.

Weiter erfindungsgemäß ist der erste Pol vom zweiten Pol zumindest teilweise umgeben. Der zweite Pol umschließt, in einem Querschnitt betrachtet, den ersten Pol zumindest teilweise. Dementsprechend liegt zwischen dem ersten und zweiten Pol ein räumlich vergrößertes einstellbares elektromagnetisches Feld vor. Hierdurch ist eine weitgehende Ionisation der Stoffprobe gewährleistet, und somit eine präzise Erfassung der Zusammensetzung der Stoffprobe.

In einer Ausführungsform des beanspruchten Verfahrens weist der zweite Pol einen Querschnitt auf, der einen im Wesentlichen geschlossenen Querschnitt, beispielsweise einen kreisförmigen, ovalen, ellipsenförmigen oder polygonförmigen Querschnitt, auf. Durch einen derartigen geschlossenen Querschnitt weist das elektromagnetische Feld zwischen dem ersten und zweiten Pol im Wesentlichen frei von Randeffekten und weist folglich exakt vorhersagbare Eigenschaften auf. Alternativ kann der zweite Pol einen im Wesentlichen U-förmigen, C-förmigen oder Omega-förmigen Querschnitt aufweisen. Randeffekte sind bei entsprechenden Querschnitten minimierbar und gleichzeitig eine einfache Montage gewährleistbar.

In einer weiteren Ausführungsform des beanspruchten Verfahrens erfolgt das Ermitteln der Konzentration der ersten Komponente anhand eines Betrags des ersten Anstiegs, der im dritten Schritt erfasst wird. Je höher die Konzentration der ersten Komponente ist, umso höher ist betragsmäßig der erfasste Anstieg der Leitfähigkeit. Alternativ oder ergänzend kann anhand der Feldstärke, bei der Anstieg der Leitfähigkeit in der Stoffprobe durch Ionisation der ersten Komponente auftritt, im dritten Schritt erfasst werden. Die Feldstärke, bei der ein im Wesentlichen stufenförmiger erster Anstieg der Leitfähigkeit vorliegt, ist charakteristisch dafür, welche die die erste Komponente ist. Anhand einer Datenbank ist so eine Vielzahl an Stoffen als erste Komponente schnell identifizierbar. Alternativ oder ergänzend kann das Identifizieren auch über einen im dritten Schritt vorliegenden Gradienten der Leitfähigkeit erfolgen. Der Gradient ist im dritten und/oder vierten Schritt ermittelbar. Ferner kann der Gradient hierbei auf eine Zeit oder eine andere Größe bezogen sein, die im beanspruchten Verfahren erfassbar ist. Eine derartige andere Größe beispielsweise kann die vorliegende Feldstärke oder eine vorliegende angelegte Gleichspannung sein. Das Identifizieren der ersten Komponente und das Ermitteln dessen Konzentration können jeweils oder kombiniert anhand einer Künstlichen Intelligenz durchgeführt werden. Alternativ oder ergänzend kann die erste Komponente auch anhand einer Änderung des entsprechenden Gradienten identifiziert werden.

Des Weiteren kann das beanspruchte Verfahren dazu eingesetzt werden, zumindest auch eine zweite Komponente der Stoffprobe zu erfassen. Dazu weist das Verfahren einen fünften Schritt auf, in dem das elektromagnetische Feld in der Messzelle weiter erzeugt wird und weiter die Leitfähigkeit zwischen dem ersten und zweiten Pol der Messzelle erfasst wird. Der fünfte Schritt entspricht hierbei im Wesentlichen einem Fortsetzen des zweiten Schritts. Das elektromagnetische Feld wird dabei mit einer einstellbaren Feldstärke erzeugt. Die Feldstärke ist durch einen Benutzer und/oder eine Steuereinheit einstellbar. Insbesondere ist die Feldstärke während des fünften Schritts steigerbar. Das Verfahren umfasst auch einen sechsten Schritt, in dem ein zweiter Anstieg der Leitfähigkeit zwischen dem ersten und zweiten Pol erfasst wird. Ebenso wird im fünften Schritt die Feldstärke erfasst, bei der der zweite Anstieg auftritt. Hierzu kann der Detektor mit geeigneten Erfassungsmitteln gekoppelt sein.

Das Verfahren weist ferner einen siebten Schritt auf, in dem die zweite Komponente der Stoffprobe identifiziert wird. Alternativ oder ergänzend wird die Konzentration der zweiten Komponente der Stoffprobe im siebten Schritt ermittelt. Das Identifizieren bzw. Ermitteln erfolgt anhand des im sechsten Schritt erfassten zweiten Anstiegs der Leitfähigkeit zwischen dem ersten und zweiten Pol, und der Feldstärke, bei der der zweite Anstieg auftritt. Der siebte Schritt erfolgt hierbei im Wesentlichen analog zum vierten Schritt. Der siebte Schritt basiert gleichermaßen darauf, dass der Betrag des zweiten Anstiegs eine Konzentration der zweiten Komponente in der Stoffprobe abbildet. Die Feldstärke, bei der der zweite Anstieg auftritt, ist analog zur ersten Komponente, charakteristisch für den Stoff, der die zweite Komponente ist. Der fünfte, sechste und siebte Schritt können unter weiterem Erzeugen und Einstellen des elektromagnetischen Felds wiederholt durchgeführt werden ums so eine dritte, vierte, usw. Komponente der Stoffprobe zu identifizieren und/oder deren Konzentration zu bestimmen.

Ferner kann das elektromagnetische Feld mittels eines Hochfrequenzgenerators erzeugt werden. Der Hochfrequenzgenerator weist hierbei eine Anregungsfrequenz von mindestens 1 MHz auf, bevorzugt von mindestens 1 GHz, besonders bevorzugt von 2,0 bis 4,0 GHz auf. Des Weiteren kann der Hochfrequenzgenerator über eine Benutzereingabe und/oder die Steuereinheit des Detektors ansteuerbar. Der Hochfrequenzgenerator kann beispielsweise über eine Amplitudenmodulation einstellbar sein, so dass ein hochfrequentes AM-Ausgangssignal erzeugt wird. Dadurch ist das elektromagnetische Feld, das in der Messzelle zu erzeugen ist, in einfacher Weise derart einstellbar, dass die zumindest für die erste Komponente der Stoffprobe die Feldstärke exakt erzeugbar ist, bei der der erste Anstieg der Leitfähigkeit zwischen dem ersten und zweiten Pol eintritt. Ferner kann der Hochfrequenzgenerator dazu ausgebildet sein, die Stoffprobe zumindest teilweise in einen sogenannten Kaltplasmazustand zu versetzen. In einem Kaltplasmazustand liegen in der Stoffprobe Temperaturen von bis zu 200°C vor, wodurch die Stoffprobe chemisch stabil bleibt. Insbesondere wird in einem Kaltplasmazustand keine Verbrennung, Pyrolyse oder ähnliches in der Stoffprobe hervorgerufen. Derartige Kaltplasmazustände sind in mit den genannten Anregungsfrequenzen in besonders vorteilhafter Weise erzielbar.

Darüber hinaus kann der Hochfrequenzgenerator mittels eines ansteigenden Rampensignals amplitudenmoduliert werden. Das ansteigende Rampensignal ist in einfacher Weise durch die Steuereinheit erzeugbar und erlaubt es, zielgerichtet unterschiedliche Feldstärken in der Messzelle zu erzeugen. Je geringer der Anstieg der Rampenfunktion ist, umso länger dauert ein Erreichen von Feldstärken, bei denen sämtliche Komponenten der Stoffprobe ionisiert sind. In Abhängigkeit von einer vorgebbaren Dauer für einen Messdurchlauf der Stoffprobe ist ein minimaler Anstieg des Rampensignals ermittelbar, bei dem die höchste erzielbare Messgenauigkeit erreicht wird. Das beanspruchte Verfahren ist so in puncto Messgeschwindigkeit und Messgenauigkeit auf die Anforderungen der jeweiligen Anwendung einfach anpassbar. Ferner kann das ansteigende Rampensignal mit einem Sinussignal moduliert werden, was eine Synchrondemodulation ermöglicht. Das Sinussignal weist dabei eine Frequenz auf, die im akustischen Spektrum liegt.

In einer weiteren Ausführungsform des beanspruchten Verfahrens wird durch den ersten Pol ein Messsignal erzeugt, das als Ausgangsspannung ausgebildet ist. Die Ausgangsspannung enthält eine elektrische Größe, die mit der Leitfähigkeit zwischen dem ersten und zweiten Pol korrespondiert. Die Ausgangsspannung wird mittels eines sogenannten Bias Tee und/oder eines Tiefpassfilters gefiltert. Die Ausgangsspannung wird durch eine Änderung der Leitfähigkeit in der Stoffprobe erzeugt. Durch das Bias Tee bzw. den Tiefpassfilter werden Hochfrequenzanteile, die durch den Hochfrequenzgenerator hervorgerufen sind, aus der Ausgangsspannung gefiltert. Dadurch wird die Ausgangsspannung im Wesentlichen auf eine Gleichspannung reduziert. Die gefilterte Ausgangsspannung, also ein Gleichspannungsanteil der ungefilterten Ausgangsspannung, wiederum gibt den Anstieg der Leitfähigkeit zwischen dem ersten und zweiten Pol wieder. Bias Tees und Tiefpassfilter sind zuverlässig, kosteneffizient und bieten eine wirksame Filterung der Ausgangsspannung, die am ersten Pol anliegt. Eine entsprechend gefilterte Ausgangsspannung ist mit gesteigerter Präzision schnell auswertbar.

Ferner kann aus dem Gleichspannungsanteil der Ausgangsspannung eine Messspannung erzeugt werden. Die Messspannung wird mittels eines Transimpedanz-Verstärkers erzeugt, dem der Gleichspannungsanteil der Ausgangsspannung über eine zwischengeschaltete Gleichspannungsquelle mittelbar als Eingang zugeführt wird. Hierdurch wird der Gleichspannungsanteil der Ausgangsspannung in eine exakt ablesbare Messspannung umgewandelt. Die Umwandlung des Gleichspannungsanteils in eine einfach ablesbare Messspannung erfolgt somit im Wesentlichen durch ein Minimum an aktiven elektrischen Komponenten und ist somit kosteneffizient umsetzbar. Alternativ oder ergänzend kann auch ein Widerstand vorgesehen sein, an dem die anfallende Spannung messbar ist, um auf den zugehörigen Gleichstrom zu schließen.

In einer weiteren Ausführungsform des beanspruchten Verfahrens kann der erste Pol des Detektors mit einem Zirkulator und einem Lastwiderstand verbunden sein. Mittels eines Zirkulators und eines Lastwiderstands ist ein im ersten Pol reflektierter Anteil an Hochfrequenzspannung aufnehmbar. Dabei ist die Hochfrequenzspannung durch den Hochfrequenzgenerator erzeugbar. Dementsprechend ist die reflektierte Hochfrequenzleistung mittels des Zirkulators und des Lastwiderstands dissipierbar. Dies erlaubt die dauerhafte Verwendung des Hochfrequenzgenerators zum Erzeugen des elektromagnetischen Felds. Der Zirkulator und der Lastwiderstand können zwischen dem Hochfrequenzgenerator und dem Bias Tee angeordnet sein, und so als Isolator dienen. Insbesondere wird der Detektor so gegen eine rücklaufende Welle der Hochfrequenzspannung zuverlässig geschützt. Die am Zirkulator und am Lastwiderstand dissipierte Hochfrequenzleistung ein Maß für die Impedanzänderung am ersten bzw. zweiten Pol.

Des Weiteren kann der erste Pol als Dorn ausgebildet sei, an dessen Spitze eine maximale Feldstärke vorliegt. Eine Ionisation der ersten bzw. zweiten Komponente der Stoffprobe tritt als erstes im Bereich der maximalen Feldstärke ein. Dementsprechend liegt ein Bereich an der Spitze des als Dorn ausgebildeten ersten Pols vor, in dem der erste bzw. zweite Anstieg der Leitfähigkeit auftritt. Der erste bzw. zweite Anstieg der Leitfähigkeit der Stoffprobe sind infolgedessen im dritten bzw. sechsten Schritt folglich präzise erfassbar. Dadurch bietet das beanspruchte Verfahren eine erhöhte Messgenauigkeit. Insbesondere kann die Stoffprobe in proximaler Richtung, also von einem freien Ende des Dorns, zugeführt werden. An einem dem ersten Pol, also dem Dorn, abgewandten Ende ist die Wirkung des elektromagnetischen Felds minimiert. Auf die Stoffprobe wird dadurch im Wesentlichen stufenförmig, also mit minimierten Anlaufbereich, durch das elektromagnetische Feld eingewirkt. Hierdurch wird die Messgenauigkeit des beanspruchten Verfahrens weiter gesteigert.

Darüber hinaus kann die Stoffprobe kontinuierlich in die Messzelle eingeleitet werden. Das Einleiten in die Messzelle kann, beispielsweise durch Vorgeben eines Zufuhrdrucks der Stoffprobe, einstellbar erfolgen. Das beanspruchte Verfahren bietet eine erhöhte Messgeschwindigkeit, so dass die Zusammensetzung der Stoffprobe auch im Wesentlichen kontinuierlich erfassbar ist. Dazu kann die Messzelle mit einem Auslasskanal versehen sein, durch die eine Stoffprobe aus der Messzelle ausleitbar ist. Der Auslasskanal kann ferner mit einer Drossel versehen sein. Hierdurch ist ein in der Messzelle vorliegender Druck in der Stoffprobe einstellbar. Der in der Stoffprobe vorliegende Druck beeinflusst die erzielbare Messgenauigkeit.

Die skizzierte Aufgabenstellung wird ebenso durch einen erfindungsgemäßen Detektor gemäß Anspruch 13 gelöst, der eine Messzelle umfasst, in die eine Stoffprobe einleitbar ist, deren Zusammensetzung mittels des Detektors zu erfassen ist. In der Messzelle ist ein erster Pol angeordnet, der von einem zweiten Pol umgeben ist. Der erste Pol ist mit einem Hochfrequenzgenerator verbunden, der zu einem Anregen eines elektromagnetischen Felds ausgebildet ist. Durch die Verbindung zwischen dem ersten Pol und dem Hochfrequenzgenerator ist somit ein elektromagnetisches Feld zwischen dem ersten und zweiten Pol erzeugbar. Das elektromagnetische Feld kann durch einen Benutzer und/oder eine Steuereinheit einstellbar sein, insbesondere in puncto Feldstärke. In einen Zwischenraum zwischen dem ersten und zweiten Pol ist die Stoffprobe einleitbar, deren Zusammensetzung zu ermitteln ist. Erfindungsgemäß ist der erste Pol zu einem Identifizieren einer ersten Komponente der Stoffprobe und/oder einem Erfassen einer Konzentration der ersten Komponente der Stoffprobe mit geeigneten Erfassungsmitteln versehen. Die Erfassungsmittel sind dazu ausgebildet, eine Änderung einer Leitfähigkeit, die zwischen dem ersten und zweiten Pol vorliegt, zu erfassen. Durch das Erfassen der Änderung der Leitfähigkeit zwischen dem ersten und zweiten Pol ist zumindest die erste Komponente identifizierbar bzw. deren Konzentration bestimmbar. Durch das elektromagnetische Feld ist in der ersten Komponente eine Ionisation hervorrufbar, durch die sich die Leitfähigkeit der Stoffprobe ändert. Die erste Komponente der Stoffprobe weist eine unveränderliche Ionisationsenergie auf, durch die charakteristisch für diese ist. Die Feldstärke, die vorliegt, wenn die Ionisation der ersten Komponente eintritt, und damit die Änderung der Leitfähigkeit der Stoffprobe, steht in einem eindeutigen Zusammenhang zum Stoff, der die erste Komponente bildet. Ein Betrag, um den sich die Leitfähigkeit ändert, stellt ein Maß für die Konzentration der ersten Komponente dar. Die Erfassungsmittel, die mit dem ersten Pol verbunden sind, messen im Wesentlichen elektrische Größen und bieten somit ein erhöhtes Maß an Messgenauigkeit. Dementsprechend ist die erste Komponente der Stoffprobe zuverlässig identifizierbar und/oder deren Konzentration ermittelbar. Der Detektor kann ferner dazu ausgebildet sein, zumindest eines der oben skizzierten Verfahren umzusetzen.

Im einer Ausführungsform des beanspruchten Detektors kann der zweite Pol den ersten Pol, in einem Querschnitt betrachtet, zumindest teilweise umgeben. Dementsprechend kann der zweite Pol einen geschlossenen Querschnitt aufweisen, der beispielsweise kreisförmig, oval, ellipsenförmig oder polygonförmig sein kann. Durch einen derartigen geschlossenen Querschnitt weist das elektromagnetische Feld zwischen dem ersten und zweiten Pol im Wesentlichen frei von Randeffekten und weist folglich exakt vorhersagbare Eigenschaften auf. Alternativ kann der zweite Pol einen Querschnitt aufweisen, der im Wesentlichen U-förmig, C-förmig oder Omega-förmig ausgebildet ist. Randeffekte sind bei entsprechenden Querschnitten minimierbar und gleichzeitig eine einfache Montage gewährleistbar.

In einer weiteren Ausführungsform des beanspruchten Detektors kann auch eine Mehrzahl Messzellen mit jeweils einem ersten und zweiten Pol vorgesehen sein, zwischen denen mittels eines Hochfrequenzgenerators ein elektromagnetisches Feld erzeugt wird. Die jeweiligen elektromagnetischen Felder weisen eine konstante Feldstärke auf und sind zum Erkennen der Zusammensetzung der Stoffprobe über die Steuereinheit miteinander gekoppelt. Die jeweiligen elektromagnetischen Felder weisen dabei untereinander unterschiedliche konstante Feldstärken auf. Dadurch sind die Hochfrequenzgeneratoren vereinfacht ansteuerbar und jeweils auf einen optimierten Dauerbetriebspunkt auslegbar. Hierdurch insgesamt so das Prinzip einer parallelisierten Messung verwirklicht. Die Anzahl an Messzellen kann vorteilhafterweise der Anzahl an Komponenten in der Stoffprobe entsprechen.

In einer weiteren Ausführungsform des beanspruchten Detektors kann der erste Pol mit einem Bias Tee, einem Tiefpassfilter und/oder einem Transimpedanz-Verstärker verbunden sein. Im ersten Pol kann durch den ersten und/oder zweiten Anstieg der Leitfähigkeit zwischen dem ersten und zweiten Pol eine Gleichspannung hervorgerufen werden, die mit einer Hochfrequenzspannung überlagert ist. Zum Erfassen des ersten bzw. zweiten Anstiegs der Leitfähigkeit wird ein Gleichspannungsanteil von der Hochfrequenzspannung, mit dem Bias Tee und/oder dem Tiefpassfilter signaltechnisch getrennt. Der Tiefpassfilter kann dabei auch als eine Mehrzahl an einzelnen Tiefpassfiltern ausgebildet sein, die miteinander verschaltet sind. Ein so mittels des Bias Tees und/oder Tiefpassfilters isoliertes Gleichspannungssignal, das dem Gleichspannungsanteil entspricht, kann mittelbar oder unmittelbar als Eingangssignal zum Transimpedanz-Verstärker weitergeleitet werden. Hierzu kann das Gleichspannungssignal, also der Gleichspannungsanteil, unter anderem dazu eingesetzt werden, einen Gleichstrom hervorzurufen. Der Gleichstrom dient hierbei als Messstrom. Unter dem Transimpedanz-Verstärker ist unter anderem eine elektronische Komponente oder Baugruppe zu verstehen, die dazu geeignet ist, stromgesteuert eine proportionale Ausgangsspannung zu erzeugen, die eine einfache Messung erlaubt. Die Ausgangsspannung stellt hierbei eine Ausgangsspannung des Detektors dar, die in einfacherer Weise messbar ist als das isolierte Gleichspannungssignal. Die Ausgangsspannung stellt somit ein Messsignal des Detektors dar. Das Gleichspannungssignal weist lediglich einen geringen Betrag auf, beispielsweise von bis zu 10 Volt. Das Bias Tee, der Tiefpassfilter und der Transimpedanz-Verstärker sind verhältnismäßig einfache Komponenten, die in zuverlässiger und kosteneffizienter Weise eine Messung des ersten bzw. zweiten Anstiegs der Leitfähigkeit zwischen dem ersten und zweiten Pol erlauben.

Ein Computerprogrammprodukt ist zu einem Empfangen und Verarbeiten eines Messsignals eines Detektors ausgebildet. Der Detektor ist zu einem Identifizieren einer ersten Komponente einer Stoffprobe und/oder Ermitteln einer Konzentration der ersten Komponente der Stoffprobe ausgebildet. Das Computerprogrammprodukt kann in remanenter Form in einem Datenträger, beispielsweise einer Speichereinheit einer Steuereinheit, gespeichert sein. Ferner kann das Computerprogrammprodukt mittels einer Recheneinheit, beispielsweise einem Prozessor der Steuereinheit, ausführbar sein.

Eine Steuereinheit verfügt über eine Speichereinheit zum remanenten Speichern von Computerprogrammprodukten und über eine Recheneinheit um diese auszuführen. Die Steuereinheit ist zum Betreiben eines Detektors ausgebildet, also mit einem solchen koppelbar und dazu geeignet, Messsignale vom Detektor zu empfangen. Die Steuereinheit ist auch dazu ausgebildet, Steuerbefehle an Komponenten des Detektors zu senden. Insbesondere ist die Steuereinheit mit einem Hochfrequenzgenerator und/oder einem Transimpedanz-Verstärker des Detektors koppelbar. Der Hochfrequenzgenerator ist über die Steuereinheit mit Steuerbefehlen ansteuerbar und vom Transimpedanz-Verstärker sind Messsignale empfangbar. Zur Gewährleistung eines bestimmungsgemäßen Betriebs des Detektors ist die Steuereinheit mit einem geeigneten Computerprogrammprodukt ausgestattet. Das Computerprogrammprodukt ist nach einer der oben dargelegten Formen ausgebildet.

Ein umfasst einen Detektor, der mit einer Steuereinheit gekoppelt ist. Der Detektor ist nach einer der oben skizzierten Ausführungsformen ausgebildet. Alternativ oder ergänzend kann die Steuereinheit wie oben beschrieben ausgebildet sein.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: einen schematischen Aufbau einer ersten Ausführungsform des beanspruchten Detektors;
- FIG 2: eine erste Ausführungsform des beanspruchten Verfahrens in einem Diagramm;
- FIG 3: einen schematischen Aufbau eines Detektorsystems.

Eine erste Ausführungsform des beanspruchten Detektors 10 schematisch in einem Längsschnitt. Der Detektor 10 umfasst ein ersten Pol 12, der im Wesentlichen als Dorn ausgebildet ist, der in einem Gehäuse aufgenommen ist, das als zweiter Pol 14 dient. Zwischen dem ersten Pol 12 und dem zweiten Pol 14 ist zumindest im Bereich einer Spitze 13 des Dorns, also des ersten Pols 12, ein Zwischenraum 19 ausgebildet, der als Messzelle 11 dient. In die Messzelle 11 ist eine Stoffprobe 15 einleitbar, die eine Zusammensetzung 16 aufweist, die mittels des Detektors 10 zu ermitteln ist. Die Stoffprobe 15 weist zumindest eine erste, eine zweite und eine dritte Komponente 21, 22, 23 auf. Ferner ist die Stoffprobe 15 bei einem entsprechenden Verfahren 100 zum Betreiben des Detektors 10 während eines ersten Schritts 110 kontinuierlich oder stoßweise zuführbar. Der erste Pol ist mit einem Hochfrequenzgenerator 41 verbunden, über den zumindest mittelbar ein steuerbares Hochfrequenzsignal 51 hervorgerufen wird, mit dem der erste Pol 12 beaufschlagt wird. Durch das Hochfrequenzsignal 51 wird zwischen dem ersten Pol 12 und dem zweiten Pol 14 ein elektromagnetisches Feld 24 hervorgerufen, das eine entsprechend veränderliche Feldstärke 25 aufweist. An der Spitze 13 des ersten Pols 12 liegt in einem Endbereich 18 eine maximale Feldstärke 25 des elektromagnetischen Felds 24 vor. Zwischen dem ersten Pols 12 und dem zweiten Pol 14 liegt durch die zugeführte Stoffprobe 15 eine Leitfähigkeit 26 vor. Durch das elektromagnetische Feld 24 ist im Endbereich 13 des ersten Pols 12, also im Bereich dessen Spitze 13, die Stoffprobe 15 durch ein entsprechendes Ansteuern des Hochfrequenzgenerators 41 komponentenweise ionisierbar. Je höher die Feldstärke 25 zwischen dem ersten Pols 12 und dem zweiten Pol 14 ist, umso mehr Komponenten der Stoffprobe 15 werden ionisiert, so dass die Leitfähigkeit 26 zwischen dem ersten Pol 12 und dem zweiten Pol 14 erhöht wird, bzw. erst leitfähig wird.

Derartige Anstiege der Leitfähigkeit 26 der Stoffprobe 15, die sich zwischen dem ersten Pol 12 und dem zweiten Pol 14 befindet, sind über Erfassungsmittel 20 erfassbar. Durch die Erfassungsmittel 20 sind entsprechende Messsignale 37 erzeugbar, die mittels einer Steuereinheit 35 auswertbar sind. Der Betrieb des Hochfrequenzgenerators 41, das Erfassen der Leitfähigkeit 26 zwischen dem ersten und zweiten Pol 12, 14 und das Ermitteln der Zusammensetzung 16 der Stoffprobe 15 sind im beanspruchten Verfahren 100 durchführbar. Der Detektor 10 verfügt auch über einen Auslasskanal 17, durch den die Stoffprobe 15 nach einem Durchführen des Verfahrens 100 ablassbar ist. Beispielsweise durch eine Drossel im Auslasskanal 17 und eine Zufuhr der zugeführten Stoffprobe 15 sind der in der Messzelle 11 vorliegende Druck und Durchfluss einstellbar. Ferner ist die Steuereinheit 35 mit einem Computerprogrammprodukt 60 ausgestattet, durch das das beanspruchte Verfahren 100 in Verbindung mit dem beanspruchten Detektor 10 umsetzbar ist. Der Detektor 10, die Erfassungsmittel 20, die Steuereinheit 35 und der Hochfrequenzgenerator 41 gehören zu einem Detektionssystem 80, das zum Durchführen des beanspruchten Verfahrens 100 ausgebildet ist. Der Aufbau zumindest des Detektors 10 ist in einem nicht näher gezeigten Digitalen Zwilling 70 gespeichert. Ein komponentenweises Ionisationsverhalten der Stoffprobe 15, also eine Änderung der Leitfähigkeit 26 der Stoffprobe 15 in Abhängigkeit von der vorliegenden veränderlichen Feldstärke 25, gehört zu einem Betriebsverhalten des Detektors 10, das mittels des Digitalen Zwillings 70 simulierbar ist.

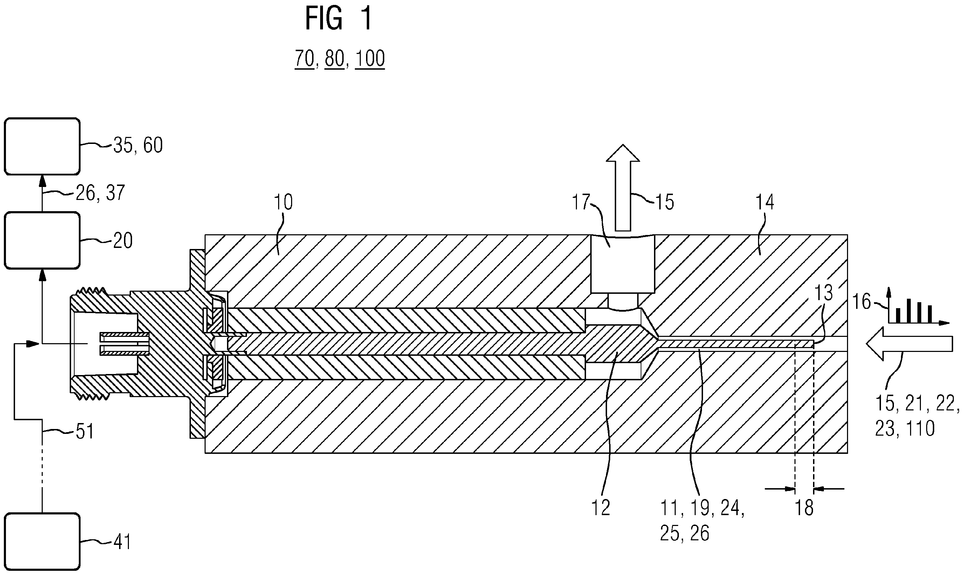

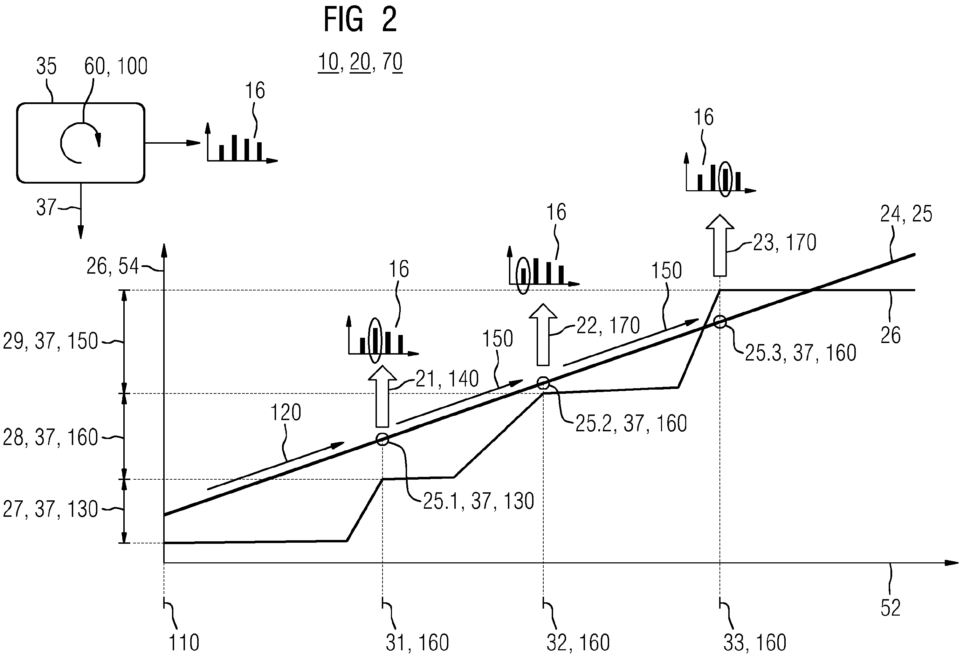

Eine erste Ausführungsform des beanspruchten Verfahrens 100 ist in einem Diagramm 50 in FIG 2 gezeigt. Das Diagramm 50 weist eine horizontale Zeitachse 52 auf und eine vertikale Größenachse 54, an der Werte für eine Feldstärke 25 und für eine Leitfähigkeit 26 zwischen einem ersten und zweiten Pol 12, 14, wie beispielsweise in FIG 1 gezeigt, ablesbar sind. Das Verfahren 100 geht von einem Zustand aus, in dem ein beanspruchter Detektor 10 in einem funktionstüchtigen Zustand bereitgestellt ist und eine Stoffprobe 15 zugeführt wird, die eine erste Komponente 21, eine zweite Komponente 22 und eine dritte Komponente 23 aufweist. Das Verfahren 100 dient dazu, eine Zusammensetzung 16 der Stoffprobe 15 zu ermitteln. Dies umfasst ein Identifizieren zumindest der ersten Komponente 21 sowie ein Erfassen einer Konzentration der ersten Komponente 21.

In einem zweiten Schritt 120 des Verfahren 100 wird ein elektromagnetisches Feld 24 zwischen dem ersten und zweiten Pol 12, 14 des Detektors 10 hervorgerufen, das eine ansteigende, also veränderliche, Feldstärke 25 aufweist. Während eines Ansteigens der Feldstärke 25 bleibt eine Leitfähigkeit 26 zwischen dem ersten und zweiten Pol 12, 14 des Detektors 10 im Wesentlichen gleich. Sobald durch das elektromagnetische Feld 24 in der Stoffprobe 15 eine erste Ionisationsenergie 31 erreicht ist, wird deren erste Komponente 21 ionisiert. Durch das Ionisieren der ersten Komponente 21 wird die Leitfähigkeit 26 gesteigert. Es tritt in einem dritten Schritt 130 ein erster Anstieg 27 der Leitfähigkeit 26 ein, der in Form von Messsignalen 37 erfassbar ist. Ebenso ist ein zeitlicher Gradient, also im Diagramm 50 eine Steilheit des ersten Anstiegs 27 der Leitfähigkeit 26, im dritten Schritt 130 in Form von Messsignalen 37 erfassbar. Die Messsignale 37 sind durch eine Steuereinheit 35, wie auch in FIG 1 gezeigt, auswertbar. Des Weiteren wird im dritten Schritt 130 die Feldstärke 25 erfasst, die beim ersten Anstieg 27 der Leitfähigkeit 26 vorliegt, also eine erste Feldstärke 25.1. Dies wird ebenfalls als Messsignal 37 an die Steuereinheit 35 gesendet. Das Erfassen der ersten Feldstärke 25.1 erfolgt hierbei mittelbar über entsprechend ausgebildete, nicht näher gezeigte Erfassungsmittel 20, die mit dem Detektor 10 verbunden sind.

Es folgt ein vierter Schritt 140, in dem die erste Komponente 21 identifiziert wird und deren Konzentration ermittelt wird. Der vierte Schritt 140 wird in der Steuereinheit 35 mittels eines Computerprogrammprodukt 60 durchgeführt, das dazu geeignet ist, die Messsignale 37 zu empfangen und zu verarbeiten. Durch die Feldstärke 25, die beim ersten Anstieg 27 vorliegt, und/oder den Gradienten des ersten Anstiegs 27 ist der Stoff, aus dem die erste Komponente 21 hergestellt ist, identifizierbar. Stoffe sind durch ihr charakteristisches Ionisationsverhalten eindeutig identifizierbar, worauf der vierte Schritt 140 basiert. Ferner wird durch einen Betrag des ersten Anstiegs 27 der Leitfähigkeit 26 die Konzentration der ersten Komponente 21 widergespiegelt. Durch die Ionisierung der ersten Komponente 21 wird diese elektrisch leitend. Je höher die Konzentration der ersten Komponente 21 in der Stoffprobe 15 ist, umso höher ist der im dritten Schritt 130 vorliegende leitende Anteil der Stoffprobe 15.

Daran schließt sich ein fünfter Schritt 150 an, in dem die Feldstärke 25, im Wesentlichen korrespondierend zum zweiten Schritt 120, weiter gesteigert wird. Es folgt ein sechster Schritt 160, in dem durch die vorliegende Feldstärke 25 in der Stoffprobe 15 eine zweite Ionisationsenergie 32 erreicht wird. Durch das Erreichen der zweiten Ionisationsenergie 32 wird eine zweite Komponente 22 der Stoffprobe 15 ionisiert, und somit die Leitfähigkeit 26 der Stoffprobe 15 weiter gesteigert. Im sechsten Schritt 160 wird der Betrag des zweiten Anstiegs 28 der Leitfähigkeit 26 erfasst und eine Feldstärke 25, bei der der zweite Anstieg 28 eintritt, also eine zweite Feldstärke 25.2. Korrespondierend zur ersten Feldstärke 25.1 ist auch die zweite Feldstärke 25.2 mittelbar über nicht näher dargestellte Erfassungsmittel 20 mittelbar erfassbar. Ebenso ist ein Gradient des zweiten Anstiegs 28 erfassbar, insbesondere ein zeitlicher Gradient. Anhand der Feldstärke 25, bei der der zweite Anstieg 28 der Leitfähigkeit 26 vorliegt, also der zweiten Feldstärke 25.2, wird die zweite Komponente 22 in einem siebten Schritt 170 des Verfahrens 100 ermittelt. Dazu werden geeignete Messsignale 37 an die Steuereinheit 35 übertragen. Im Wesentlichen analog zur ersten Komponente 21 im vierten Schritt 140, wird das Ionisationsverhalten der zweiten Komponente 22 durch die zweite Feldstärke 25.2, die beim zweiten Anstieg 28 vorliegt, und/oder dessen Gradienten charakterisiert. Dementsprechend wird die zweite Komponente 22 im siebten Schritt 170 identifiziert. Ebenfalls analog zur ersten Komponente 21 im vierten Schritt 140, wird im siebten Schritt 170 anhand des Betrags des zweiten Anstiegs 28 die Konzentration der zweiten Komponente 22 ermittelt.

Analog werden der fünfte, sechste und siebte Schritt 150, 160, 170 wiederholt durchgeführt, um eine dritte Komponente 23 in der Stoffprobe 15 zu identifizieren und deren Konzentration zu ermitteln. Die ermittelte Zusammensetzung 16 ist über die Steuereinheit 35 an einen Benutzer ausgebbar. Ferner ist die Steuereinheit 35 mit einem geeigneten Computerprogrammprodukt 60 ausgestattet, das dazu ausgebildet ist, das beanspruchte Verfahren 100 umzusetzen.

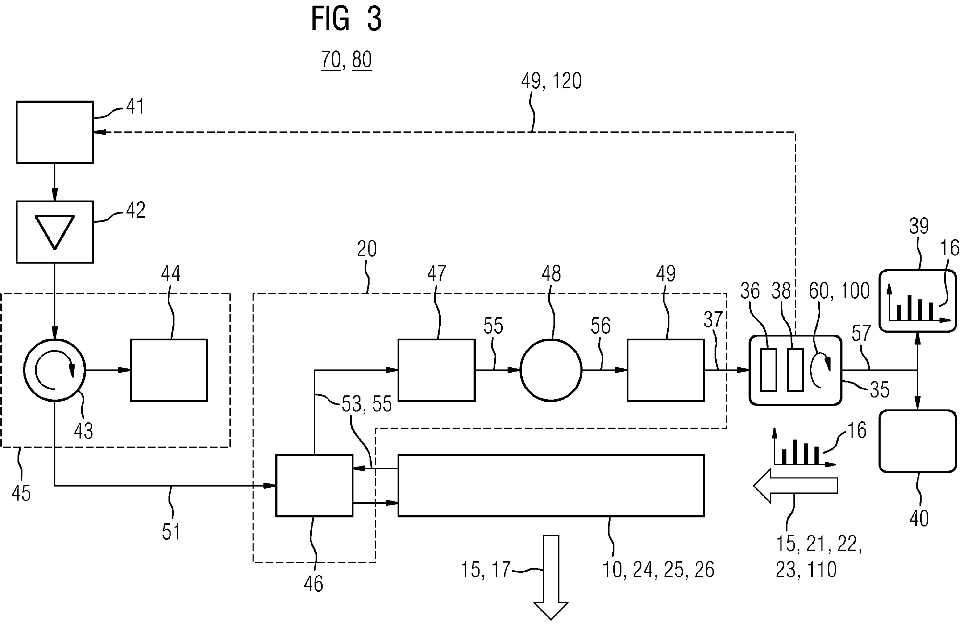

Ein Aufbau eines Detektorsystems 80 mit einem beanspruchten Detektor 10 ist in FIG 3 schematisch dargestellt. Der Detektor 10 kann gemäß der Ausführungsform nach FIG 1 ausgebildet sein. Das Detektorsystem 80 weist einen Hochfrequenzgenerator 41 auf, der dazu ausgebildet ist, ein Hochfrequenzsignal 51 mit einer Anregungsfrequenz von mindestens 1 MHz auf, bevorzugt von mindestens 1 GHz, besonders bevorzugt von 2,0 bis 4,0 GHz zu erzeugen. Der Hochfrequenzgenerator 41 ist mit einem Verstärker 42 gekoppelt, durch den das Hochfrequenzsignal 51 zum Erzeugen eines elektromagnetischen Felds 24 im Detektor 10 verstärkt wird. Weiter ist der Verstärker 24 mit einem Zirkulator 43 mit einem Lastwiderstand 44 gekoppelt, die dazu ausgebildet sind, ein aus dem Detektor 10 reflektiertes Hochfrequenzsignal zu dissipieren, also im Wesentlichen in Wärme umzuwandeln. Dadurch dienen der Zirkulator 43 und der Lastwiderstand 44 als Isolator 45, durch den der Hochfrequenzgenerator 41 und der Verstärker 42 geschützt werden. Der Isolator 45 wiederum ist mit einem sogenannten Bias Tee 46 gekoppelt, das dazu ausgebildet ist, das vom Hochfrequenzgenerator 41 und dem Verstärker 42 erzeugte Hochfrequenzsignal 51 in den Detektor 10 zu leiten um darin das elektromagnetische Feld 24 hervorzurufen. Der Hochfrequenzverstärker 41 ist über Steuerbefehle 49 von einer Steuereinheit 35 ansteuerbar, so dass das Hochfrequenzsignal 51 veränderlich ist. Dadurch ist die Feldstärke 25 des elektromagnetischen Felds 24 im zweiten Schritt 120 eines entsprechenden Verfahrens 100 einstellbar. Dementsprechend ist auch das elektromagnetische Feld 24 im Detektor 10 in puncto Feldstärke 25 veränderlich. Durch die veränderliche Feldstärke 25 wird eine in eines Messzelle 11 des Detektors 10 zugeführte Stoffprobe 15 komponentenweise ionisiert, wodurch sich Änderungen der Leitfähigkeit 26 in der Stoffprobe 15 ergeben. Durch die Änderungen der Leitfähigkeit 26 in der Stoffprobe 15 wird eine Ausgangsspannung 53 erzeugt, die das im Detektor 10 reflektierte Hochfrequenzsignal 51 umfasst. Die Ausgangsspannung 53 umfasst neben einem Hochfrequenzanteil einen Gleichspannungsanteil 55, der für eine im Detektor 10 vorliegende Leitfähigkeit 26 der Stoffprobe 15 charakteristisch ist. Über das Bias Tee 46 wird die Ausgangsspannung 53 zu einer weiteren Verarbeitung ausgekoppelt. Zu einem Ermitteln des Gleichspannungsanteils 55 in der Ausgangsspannung 53 wird diese mittels zumindest eines Tiefpassfilters 47 gefiltert. Der Tiefpassfilter 47 gemäß FIG 3 kann eine Mehrzahl an Tiefpassfilter-Komponenten umfassen. Über den Tiefpassfilter 47 wird der Gleichspannungsanteil 55 einer Gleichspannungsquelle 48 zugeführt, die als Batterie ausgebildet ist. Durch die Gleichspannungsquelle 48 wird aus dem Gleichspannungsanteil 55 ein Gleichstromsignal erzeugt, das als Messstrom 56 dient und das an einen Transimpedanzverstärker 49 weitergeleitet wird. Mittels des Transimpedanzverstärkers 49 und des Gleichstromsignals, also des Messstroms 56, wird ein Messsignal 37 des Detektors 10 erzeugt. Der Bias Tee 46, der Tiefpassfilter 47, die Gleichspannungsquelle 48 und der Transimpedanzversätrker 49 gehören zu den Erfassungsmitteln 20, die mit dem Detektor 10 gekoppelt sind und dazu dienen, Messsignale 37 zu erzeugen, durch die die Änderungen der Leitfähigkeit 26 in der Stoffprobe 15 zu erfassen. Die Messsignale 37 werden an die Steuereinheit 35 weitergeleitet, die über eine Speichereinheit 36 und eine Recheneinheit 38 verfügt, über die ein Computerprogrammprodukt 60 ausführbar ist. Das Computerprogrammprodukt 60 ist dazu ausgebildet, zumindest eine Ausführungsform des beanspruchten Verfahrens 100 auszuführen und ist dementsprechend geeignet, Messignale 37 zu empfangen und zu verarbeiten. Über das Verfahren 100, und damit auch über das Computerprogrammprodukt 60, ist die Zusammensetzung 16 der Stoffprobe 15 ermittelbar. Dies umfasst ein Identifizieren einer ersten, zweiten und dritten Komponenten 21, 22, 23 der Stoffprobe 15. Die ermittelte Zusammensetzung 16 wird über eine kommunikative Datenverbindung 57 an eine Anzeigeeinheit 39 ausgegeben. Ebenso wird die ermittelt Zusammensetzung 16 an eine übergeordnete Steuereinheit 40 ausgegeben, die als Leitrechner, Speicherprogrammierbare Steuerung, und/oder als Computer-Cloud ausgebildet sein kann. Die kommunikative Datenverbindung 57 kann als Netzwerkverbindung, als Internet-Verbindung und/oder als Mobilfunkverbindung ausgebildet sein. Nach einem Durchlaufen der Messzelle 11 wird die Stoffprobe 15 über einen nicht näher gezeigten Auslasskanal 17 wieder aus der Messzelle 11, und damit aus dem Detektor 10, abgelassen. Das in FIG 3 gezeigte Detektorsystem 80 ist in einem Digitalen Zwilling 70 abgebildet, durch den dessen Betriebsverhalten simulierbar ist. Zum Betriebsverhalten gehört neben einem Ionisationsverhalten der Stoffprobe 15 auch das elektrische Verhalten der Erfassungsmittel 20, also deren Verarbeitung der Ausgangsspannung 53 vom Detektor 10. Der Digitale Zwilling 70 ist zu einem Identifizieren einer defekten oder degradierenden Komponente des Detektors 10, der Erfassungsmittel 20, des Hochfrequenzgenerators 41, des Verstärkers 42 und/oder des Isolators 45 ausgebildet. Dazu ist ein erfasstes Betriebsverhalten des Detektorsystems 80 mit einem über den Digitalen Zwilling 70 simulierten Betriebsverhalten abgleichbar und auf Plausibilität überprüfbar.

## Patentansprüche

1. Verfahren (100) zum Erfassen einer Zusammensetzung (16) einer Stoffprobe (15), die zumindest eine erste und zweite Komponente (21, 22) aufweist, mittels eines Detektors (10) umfassend die Schritte:
a) Bereitstellen des Detektors (10) in einem aktiven Betriebszustand und Zuführen der Stoffprobe (15) in eine Messzelle (11);
b) Erzeugen eines elektromagnetischen Felds (24) mit einstellbarer Feldstärke (25) in der Messzelle (11) und Erfassen einer Leitfähigkeit (26) zwischen einem ersten und einem zweiten Pol (12, 14) der Messzelle (11);
c) Erfassen eines ersten Anstiegs der Leitfähigkeit (26) zwischen dem ersten und zweiten Pol (12, 14) und einer beim ersten Anstieg (27) vorliegenden Feldstärke (25);
d) Identifizieren der ersten Komponente (21) und/oder Erfassen einer Konzentration der ersten Komponente (21) der Stoffprobe (15) anhand des in Schritt c) erfassten ersten Anstiegs der Leitfähigkeit (26) und der dabei vorliegenden Feldstärke (25),
**dadurch gekennzeichnet, dass** der erste Pol (12) vom zweiten Pol (14) zumindest teilweise umgeben ist und dass das elektromagnetische Feld (24) mittels eines Hochfrequenzgenerators (41) erzeugt wird, der mit dem ersten Pol (12) verbunden ist.

2. Verfahren (100) nach Anspruch 1, **dadurch gekennzeichnet, dass** der erste Pol (12) vom zweiten Pol (14) umgeben ist.

3. Verfahren (100) nach Anspruch 1, **dadurch gekennzeichnet, dass** der zweite Pol (14) einen geschlossenen, einen U-förmigen, einen C-förmigen oder Omega-förmigen Querschnitt aufweist.

4. Verfahren (100) nach einem der Ansprüche 1 bis 3, **dadurch gekennzeichnet, dass** anhand eines Betrags des ersten Anstiegs (27) der Leitfähigkeit (26) eine Konzentration der ersten Komponente (21) ermittelt wird.

5. Verfahren (100) nach einem der Ansprüche 1 bis 4, **dadurch gekennzeichnet, dass** anhand zumindest der im Schritt c) erfassten Feldstärke (25), die beim ersten Anstieg der Leitfähigkeit (26) vorliegt, die erste Komponente (21) identifiziert wird und/oder anhand eines im Schritt c) vorliegenden Gradienten der Leitfähigkeit (26).

6. Verfahren (100) nach einem der Ansprüche 1 bis 5, **dadurch gekennzeichnet, dass** das Verfahren (100) weiter folgende Schritte umfasst:
e) Weiteres Erzeugen des elektromagnetischen Felds (24) mit einstellbarer Feldstärke (25) in der Messzelle (11) und weiteres Erfassen der Leitfähigkeit (26) zwischen dem ersten und zweiten Pol (12, 14) der Messzelle (11);
f) Erfassen eines zweiten Anstiegs (28) der Leitfähigkeit (28) zwischen dem ersten und zweiten Pol (12, 14) und einer beim zweiten Anstieg (28) vorliegenden Feldstärke (25) ;
g) Identifizieren der zweiten Komponente (22) und/oder Erfassen einer Konzentration der zweiten Komponente (22) der Stoffprobe (15) anhand des in Schritt f) erfassten zweiten Anstiegs (28) der Leitfähigkeit (26) und der dabei vorliegenden Feldstärke (25).

7. Verfahren (100) nach einem der Ansprüche 1 bis 6, **dadurch gekennzeichnet, dass** der Hochfrequenzgenerator (41) mittels eines ansteigenden Rampensignals amplitudenmoduliert wird.

8. Verfahren (100) nach einem der Ansprüche 1 bis 7, **dadurch gekennzeichnet, dass** eine erfasste Ausgangsspannung (53) mittels eines Bias Tees (46) und/oder eines Tiefpassfilters (47) gefiltert wird, wobei die Ausgangsspannung (53) durch eine Änderung der Leitfähigkeit (26) in der Stoffprobe (15) erzeugt wird.

9. Verfahren (100) nach einem der Ansprüche 1 bis 8, **dadurch gekennzeichnet, dass** ein durch einen Gleichspannungsanteil (55) der Ausgangsspannung (53) erzeugter Messstrom (56) mittels eines Transimpedanz-Verstärkers (49) verstärkt wird.

10. Verfahren (100) nach einem der Ansprüche 1 bis 9, **dadurch gekennzeichnet, dass** der erste Pol (12) des Detektors (10) mit einem Zirkulator (43) und einem Lastwiderstand (44) verbunden ist.

11. Verfahren (100) nach einem der Ansprüche 1 bis 10, **dadurch gekennzeichnet, dass** der erste Pol (12) als Dorn ausgebildet ist, an dessen Spitze (13) eine maximale Feldstärke (25) vorliegt.

12. Verfahren (100) nach einem der Ansprüche 1 bis 11, **dadurch gekennzeichnet, dass** die Stoffprobe (15) kontinuierlich in die Messzelle (11) geleitet wird.

13. Detektor (10), umfassend einen Hochfrequenzgenerator (41) und Erfassungsmittel (20) zum Erfassen einer Änderung einer Leitfähigkeit (26) einer Stoffprobe (15), eine Messzelle (11), in der ein erster Pol (12) und ein zweiter Pol (14) angeordnet sind, wobei der erste Pol (12) mit dem Hochfrequenzgenerator (41) zu einem Erzeugen eines elektromagnetischen Felds (24) verbunden ist, und zwischen den ersten und zweiten Pol (12, 14) die Stoffprobe (15) einleitbar ist, wobei der erste Pol (12) zu einem Identifizieren und/oder Erfassen einer Konzentration einer ersten Komponente (21) der Stoffprobe (15) mit den Erfassungsmitteln (20) verbunden ist, **dadurch gekennzeichnet, dass** der erste Pol (12) vom zweiten Pol (14) umgeben ist.

14. Detektor (10) nach Anspruch 13, **dadurch gekennzeichnet, dass** der zweite Pol (14) einen geschlossenen, einen U-förmigen, einen C-förmigen oder einen Omega-förmigen Querschnitt aufweist.

15. Detektor (10) nach Anspruch 13 oder 14, **dadurch gekennzeichnet, dass** der erste Pol (12) mit einem Bias Tee (46), einem Tiefpassfilter (47) und/oder einem Transimpedanz-Verstärker (49) verbunden ist.

## Claims

1. Method (100) for detecting a composition (16) of a substance sample (15) which includes at least one first and second component (21, 22) by way of a detector (10) comprising the steps of:
a) providing the detector (10) in an active operating state and supplying the substance sample (15) to a measurement cell (11);
b) generating an electromagnetic field (24) with an adjustable field strength (25) in the measurement cell (11) and detecting a conductivity (26) between a first and a second pole (12, 14) of the measurement cell (11);
c) detecting a first rise in conductivity (26) between the first and second poles (12, 14) and a field strength (25) prevailing during the first rise (27);
d) identifying the first component (21) and/or detecting a concentration of the first component (21) of the substance sample (15) on the basis of the first rise in conductivity (26) detected in step c) and the field strength (25) prevailing at that time,
**characterised in that** the first pole (12) is surrounded at least in part by the second pole (14) and that the electromagnetic field (24) is generated by way of a high-frequency generator (41), which is connected to the first pole (12) .

2. Method (100) according to claim 1, **characterised in that** the first pole (12) is surrounded by the second pole (14).

3. Method (100) according to claim 1, **characterised in that** the second pole (14) has a closed, a U-shaped, a C-shaped or omega-shaped cross-section.

4. Method (100) according to one of claims 1 to 3, **characterised in that** a concentration of the first component (21) is determined on the basis of a magnitude of the first rise (27) in conductivity (26).

5. Method (100) according to one of claims 1 to 4, **characterised in that** the first component (21) is identified on the basis of at least the field strength (25) prevailing during the first rise in conductivity (26) and detected in step c), and/or on the basis of a conductivity (26) gradient prevailing in step c).

6. Method (100) according to one of claims 1 to 5, **characterised in that** the method (100) further comprises the following steps:
e) further generating the electromagnetic field (24) with an adjustable field strength (25) in the measurement cell (11) and further detecting the conductivity (26) between the first and second poles (12, 14) of the measurement cell (11) ;
f) detecting a second rise (28) in conductivity (28) between the first and second poles (12, 14) and a field strength (25) prevailing during the second rise (28);
g) identifying the second component (22) and/or detecting a concentration of the second component (22) of the substance sample (15) on the basis of the second rise (28) in conductivity (26) detected in step f) and the field strength (25) prevailing at that time.

7. Method (100) according to one of claims 1 to 6, **characterised in that** the high-frequency generator (41) is amplitude-modulated by way of a rising ramp signal.

8. Method (100) according to one of claims 1 to 7, **characterised in that** a detected output voltage (53) is filtered by way of a bias tee (46) and/or a low-pass filter (47), wherein the output voltage (53) is generated by a change in conductivity (26) in the substance sample (15).

9. Method (100) according to one of claims 1 to 8, **characterised in that** a measurement current (56) generated by a DC voltage component (55) of the output voltage (53) is amplified by way of a transimpedance amplifier (49).

10. Method (100) according to one of claims 1 to 9, **characterised in that** the first pole (12) of the detector (10) is connected to a circulator (43) and a load resistor (44).

11. Method (100) according to one of claims 1 to 10, **characterised in that** the first pole (12) takes the form of a spike at the tip (13) of which a maximum field strength (25) prevails.

12. Method (100) according to one of claims 1 to 11, **characterised in that** the substance sample (15) is passed continuously into the measurement cell (11).

13. Detector (10) comprising a high-frequency generator (41) and detection means (20) for detecting a change in conductivity (26) of a substance sample (15), a measurement cell (11) in which a first pole (12) and a second pole (14) are arranged, wherein the first pole (12) is connected to the high-frequency generator (41) for generating an electromagnetic field (24), and the substance sample (15) is introducible between the first and second poles (12, 14), wherein the first pole (12) is connected to the detection means (20) for identifying and/or detecting a concentration of a first component (21) of the substance sample (15), **characterised in that** the first pole (12) is surrounded by the second pole (14).

14. Detector (10) according to claim 13, **characterised in that** the second pole (14) has a closed, a U-shaped, a C-shaped or an omega-shaped cross-section.

15. Detector (10) according to claim 13 or 14, **characterised in that** the first pole (12) is connected to a bias tee (46), a low-pass filter (47) and/or a transimpedance amplifier (49).

## Revendications

1. Procédé (100) de détermination d'une composition (16) d'un échantillon (15) de substance, qui comporte au moins un premier et un deuxième constituants (21, 22), au moyen d'un détecteur (10) comprenant les stades :
a) on se procure le détecteur (10) dans un état de fonctionnement actif et on apporte l'échantillon (15) de substance à une cellule (11) de mesure ;
b) on produit un champ (24) électromagnétique ayant une intensité (25) du champ réglable dans la cellule (11) de mesure et on détecte une conductivité (26) entre un premier et un deuxième pôles (12, 14) de la cellule (11) de mesure ;
c) on détecte une première augmentation de la conductivité (26) entre le premier et le deuxième pôles (12, 14) et une intensité (25) du champ présente lors de la première augmentation (27) ;
d) on identifie le premier constituant (21) et/ou on détecte une concentration du premier constituant (21) de l'échantillon (15) de substance à l'aide de la première augmentation, détectée dans le stade c), de la conductivité (26) et de l'intensité (25) du champ ainsi présentes,
**caractérisé en ce que** le premier pôle (12) est entouré au moins en partie du deuxième pôle (14) et **en ce que** l'on produit un champ (24) électromagnétique au moyen d'un générateur (41) de haute fréquence, qui est connecté au premier pôle (12).

2. Procédé (100) suivant la revendication 1, **caractérisé en ce que** le premier pôle (12) est entouré du deuxième pôle (14).

3. Procédé (100) suivant la revendication 1, **caractérisé en ce que** le deuxième pôle (14) a une section transversale fermée, une section transversale en forme de U, une section transversale en forme de C, une section transversale en forme d'Oméga.

4. Procédé (100) suivant l'une des revendications 1 à 3, **caractérisé en ce que**, à l'aide de la valeur de la première augmentation (27) de la conductivité (26), on détermine une concentration du premier constituant (21).

5. Procédé (100) suivant l'une des revendications 1 à 4, **caractérisé en ce que**, à l'aide de la au moins une intensité (25) du champ détecté dans le stade c), qui est présente lors de la première augmentation de la conductivité (26), on identifie le premier constituant (21) et/ou à l'aide d'un gradient de la conductivité (26) présent dans le stade c).

6. Procédé (100) suivant l'une des revendications 1 à 5, **caractérisé en ce que** le procédé (100) comprend en outre les stades suivants :
e) on continue à produire le champ (24) électromagnétique avec une intensité (25) du champ réglable dans la cellule (11) de mesure et on continue à détecter la conductivité (26) entre le premier et le deuxième pôles (12, 14) de la cellule (11) de mesure ;
f) on détecte une deuxième élévation (28) de la conductivité (28) entre le premier et le deuxième pôles (12, 14) et une intensité (25) du champ présente lors de la deuxième augmentation (28) ;
g) on identifie le deuxième constituant (22) et/ou on détecte une concentration du deuxième constituant (22) de l'échantillon (15) de substance à l'aide de la deuxième augmentation (28), détectée dans le stade f), de la conductivité (26) et de l'intensité (25) du champ ainsi présente.

7. Procédé (100) suivant l'une des revendications 1 à 6, **caractérisé en ce que** l'on module en amplitude le générateur (41) de haute fréquence, au moyen d'un signal en rampe croissant.

8. Procédé (100) suivant l'une des revendications 1 à 7, **caractérisé en ce que** l'on filtre une tension (53) de sortie détectée, au moyen d'un bias tee (46) et/ou d'un filtre (47) passe-bas, dans lequel on produit la tension (53) de sortie par une modification de la conductivité (26) dans l'échantillon (15) de substance.

9. Procédé (100) suivant l'une des revendications 1 à 8, **caractérisé en ce que** l'on amplifie, au moyen d'un amplificateur (49) de transimpédance, un courant (56) de mesure produit par une composante (55) en tension continue de la tension (53) de sortie.

10. Procédé (100) suivant l'une des revendications 1 à 9, **caractérisé en ce que** le premier pôle (12) du détecteur (10) est connecté à un circulateur (43) et à une résistance (44) de charge.

11. Procédé (100) suivant l'une des revendications 1 à 10, **caractérisé en ce que** le premier pôle (12) est constitué sous la forme d'un mandrin, à la pointe (13) duquel il y a une intensité (25) maximum du champ.

12. Procédé (100) suivant l'une des revendications 1 à 11, **caractérisé en ce que** l'on fait passer l'échantillon (15) de substance en continu dans la cellule (11) de mesure.

13. Détecteur (10), comprenant un générateur (41) de haute fréquence et des moyens (20) de détection pour la détection d'une variation de la conductivité (26) d'un échantillon (15) de substance, une cellule (11) de mesure, dans laquelle est monté un premier pôle (12) et un deuxième pôle (14), dans lequel le premier pôle (12) est connecté au générateur (41) de haute fréquence pour la production d'un champ (24) électromagnétique et l'échantillon (15) de substance peut être introduit entre le premier et le deuxième pôles (12, 14), dans lequel le premier pôle (12) est connecté aux moyens (20) de détection pour une identification et/ou une détection de concentration d'un premier constituant (21) de l'échantillon (15) de substance, **caractérisé en ce que** le premier pôle (12) est entouré du deuxième pôle (14) .

14. Détecteur (10) suivant la revendication 13, **caractérisé en ce que** le deuxième pôle (14) a une section transversale fermée, une section transversale en forme de U, une section transversale en forme de C, une section transversale en forme d'Oméga.

15. Détecteur (10) suivant la revendication 13 ou 14, **caractérisé en ce que** le premier pôle (12) est connecté à un bias tee (46), un filtre (47) passe-bas et/ou un amplificateur (49) de transimpédance.
